Europäisches Patentamt

**European Patent Office**

Office européen des brevets

(11) Publication number: **0 032 230**
**A2**

(12) # EUROPEAN PATENT APPLICATION

(21) Application number: **80108128.2**

(22) Date of filing: **22.12.80**

(51) Int. Cl.³: **G 11 B 5/12**
**G 11 B 5/42**

(30) Priority: **14.01.80 US 111969**

(43) Date of publication of application:
**22.07.81 Bulletin 81/29**

(84) Designated Contracting States:
**AT BE CH DE FR GB IT LI LU NL SE**

(71) Applicant: **SIEMENS AKTIENGESELLSCHAFT Berlin
und München**
**Postfach 22 02 61**
**D-8000 München 22(DE)**

(72) Inventor: **Kayser, Wolfgang**
**4830 East Fanfol Drive**
**Paradise Valley Arizona(US)**

(54) Integrated magnetic transducer and method of manufacturing the same.

(57) There is disclosed an integrated magnetic transducer for recording and reproducing high frequency electrical signals on a magnetic recording medium and a method of manufacturing the transducer. A silicon substrate has a preferably V-shaped groove with two sides and two ends extending through the silicon substrate. Over the sides of the V-shaped groove a layer of magnetically inductive material is disposed which forms the pole pieces of the transducer. An electrically conductive layer covers this layer of magnetically inductive material and fills the space within the V-shaped groove. Another layer of magnetically inductive material is disposed over the electrically conductive layer. This second magnetically inductive layer completes the magnetic circuit. Means for contacting the electrically conductive layer at opposite ends of the V-shaped groove supply the electrically conductive layer with electrical current. The converging layers of said magnetically inductive material forming the pole pieces of the magnetic transducer are spaced apart at the apex of the V-shaped groove to form a transducer gap.

FIG. 1

0032230

VPA 80 P 8201 EUR

## BACKGROUND OF THE INVENTION

The invention relates to magnetic transducers for recording and producing high frequency electrical signals on a magnetic recording medium; and more specifically it relates to a thin-film magnetic transducer integrated on a silicon substrate.

Since the appearance of the first magnetic recording system for computer storage extensive work has been carried out to answer the quest for lower cost, higher performance magnetic systems. Computer storage systems are mentioned as an example, as for large capacity, high performance storage systems the cost contribution by multi-channel transducers have been very significant. As transducers are required to be ever smaller and smaller even the concept of the structure of magnetic transducers changed.

Former conventional ferrite core transducers with multiple turns of the winding have been replaced by thin-film, multi-turn and even single turn transducers, as well known to those who are skilled in the art. The U.S. patent 4,044,394 to Hanazano et al, for example, discloses a narrow track, multi-turn magnetic transducer which can be formed by integrated circuit fabrication technique such as evaporation, chemical etching, etc. The magnetic transducer with a coil structure of four or more turns comprises a coil divided into sections with a plurality of sets of conductor films insulated from one another. The U.S. patent 3,859,664 to Chynoweth et al discloses a batch fabricated transducer structure of a so called "turn in gap" head. This means a single-turn structure of the magnetic transducer.

These examples illustrate that thin-film magnetic transducers can obviously be fabricated with extremely small

dimensions. They contain all the functional elements of conventional magnetic recording transducers, a resolving structure and a driving structure. The elements of thin-film transducers, also can be described in conventional terms, i.e, they have pole pieces, a yoke or a gap, etc, even if these elements will not appear in the physical form as with conventional transducers. The thin film counterparts are fabricated by film deposition and photoetching processes which are more closely related to integrated circuit fabrication. As a further consequence, any other dimensions such as gap length, track width, track spacing and gap depth can be achieved with high accuracy. This thin-film fabrication technique makes the fabrication of multi-channel magnetic recording transducers no more difficult than that of single channel transducers.

As described in an article "Thin-Film Inductive Recording Heads" published in "AIP Conference Proceedings", 1974, pages 534 to 540, two basic structures of thin-film inductive recording transducers have become known: the horizontal transducer" and the "vertical transducer." The distinction is derived from that basically thin-film transducers can be deposited either vertically against one side of a substrate or horizontally on it. The horizontal type of a single turn inductive transducer requires the formation of a short gap by electron beam exposure or machining. This manufacturing complication and other disadvantageous characteristics in reference to a vertical transducer have limited the attention to the horizontal inductive transducer. Furthermore, multi-turn transducers commonly require a multiplicity of deposition steps to build up the different layers deposited through appropriate masks. This particular design limits the realizable transducer dimensions and center-to-center

0032230

VPA 80 P 8201 EUR

spacings. On the other hand, single turn devices can lead to smaller transducers on tighter center-to-center spacings. Because of these disadvantages of horizontal magnetic transducers and a complication of multi-turn transducers, most work has concentrated on vertical single turn transducer type.

A single turn magnetic transducer, even if the efficiency is high, the constraint of having the "winding" tc be the gap spacer will result in extremely high write current densities. For this reason above all, single turn transducers have a more serious thermal problem than multi-turn transducers or even more than conventional transducers. Another disadvantage of the known vertical single turn transducer is a head structure which is perpendicular to the recording medium. Since the surface of the pole pieces has to be lapped to achieve a very plane and smooth surface the head chip has to be imbedded between guiding blocks prior to lapping.

It is, therefore, an object of the invention to provide an improved integrated magnetic head for recording and reproducing high frequency electrical signals on a magnetic recording medium.

Another object of the invention is to provide an integrated magnetic transducer with a minimum physical size which is suitable to meet the requirements of high density magnetic recording.

Still another object of the invention is to provide an integrated magnetic transducer with accurate physical dimensions and a method of manufacturing the same with an extremely high production repeatability.

A further object of the invention is to provide an improved integrated magnetic transducer which is to be constructed in a pure planar fabrication technique.

Still another object of the invention is to provide an integrated magnetic transducer with a structure which is efficiently adapted to carry heat from the conductor to the substrate to meet the thermal requirements of thin-film magnetic transducers.

## SUMMARY OF THE INVENTION

The foregoing objects are achieved in the present invention by a structure of a magnetic transducer which is to be defined as quasi-vertical. The new and useful magnetic transducer has a silicon substrate as a base with a groove extending through the silicon substrate. The groove preferably has declining sides which form a V-shaped cutting in a cross sectional view and two ends. A magnetically inductive material is disposed over the sides of the groove to form pole pieces of a transducer. The remaining space in the groove is filled with an electrically conductive layer which is to be understood as a single turn of the magnetic transducer. On opposite ends of the groove contact leads are disposed on this layer to supply electrical current to the conductive layer. A second layer of magnetically inductive material is disposed over the electrically conductive layer in the center between the contact leads. This second magnetically inductive layer, forming a yoke of the transducer, is contacted to the first magnetically conductive layer to complete the magnetic circuit. Additionally, there is disclosed a manufacturing method of the transducer which is based on an anisotropic etching process to form the groove in the silicon substrate. This etching process is followed by a series of deposition steps to build up the transducer structure.

BRIEF DESCRIPTION OF THE DRAWINGS

Figure 1 shows a schematic three-dimensional view of an integrated magnetic recording transducer to illustrate its quasi-vertical structure;

Figure 2 shows a cross sectional view through the structure of Figure 1 to illustrate further details of a magnetic transducer with a V-shaped groove in a silicon substrate;

Figure 3 illustrates another magnetic transducer structure with a flat groove in a silicon substrate comprising of declining sides and a horizontal bottom part with a centered slotted hole;

Figure 4 schematically illustrates the arrangement of a variety of magnetic transducers in a silicon substrate; and

Figure 5 schematically illustrates the arrangement of an integrated magnetic transducer and additional electronic components on the same silicon substrate to form read/ write circuits for operating a neighboring magnetic transducer.

DETAILED DESCRIPTION OF THE PREFERRED EMBODIMENT

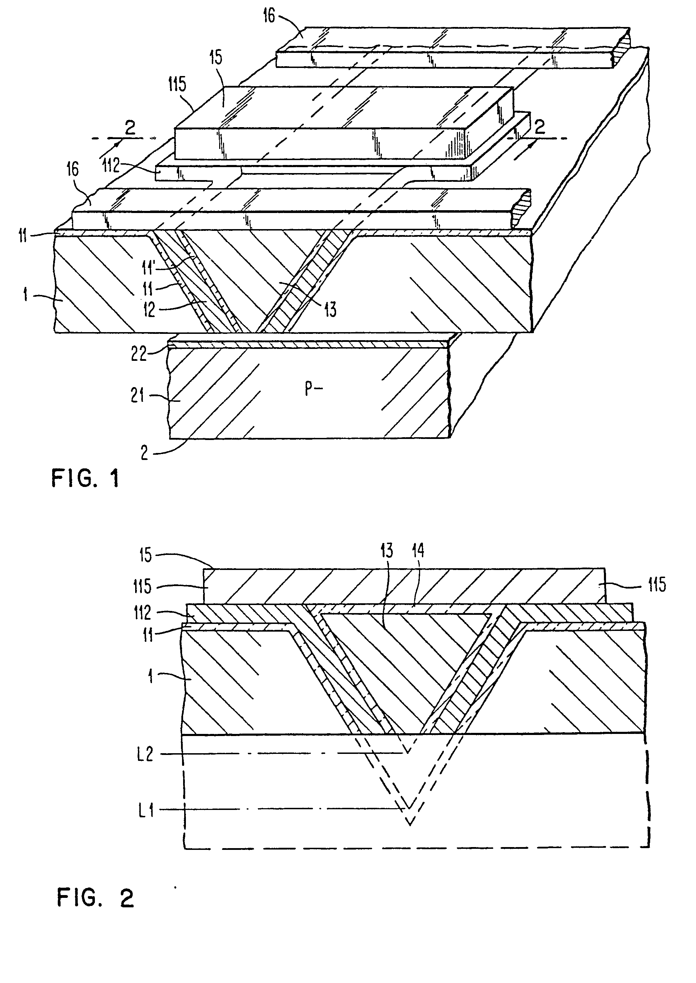

Embodiments of the invention will now be described in detail in reference to the accompanying drawings. The schematic diagram of Fig. 1 illustrates in a three-dimensional view, a basic structure of a thin-film magnetic transducer integrated on a silicon substrate 1 which is arranged atop of a recording medium 2. The recording medium 2 may be a magnetic disk with a carrier base 21 and a recording layer 22 on the upper surface of the carrier. In operation the recording medium 2 is moved relatively in reference to the magnetic transducer chip as indicated by an arrow.

The silicon substrate 1 carrying the magnetic transducer is provided with a V-shaped groove. That groove has two sides and two ends extending through the silicon substrate. Disposed on the sides of the groove and the upper surface of the silicon substrate 1 is a first insulating layer 11 of silicon dioxide. On the sides of the V-shaped groove atop this first insulating layer a first layer of magnetically inductive material 12 is deposited. This layer is buried under a second insulating layer 11', made of silicon dioxide. The remaining space in the V-shaped groove is filled with an electrical conductive layer 13 which is covered by a third insulating layer 14 in a center area of the V-shaped groove. In this area the first layer of magnetic inductive material 12 is extending from the sides of the V-shaped groove on the upper surface of the silicon substrate 1 to form contact pads 112 which are covered by respective end portions 115 of the second layer of magnetic inductive material 15. Spaced apart from this

0032230

VPA 80 P 8201 EUR

second layer of magnetic inductive material 15 at opposite ends of the V-shaped groove contact leads 16 are deposited on the surface of the silicon substrate 1. The contact leads 16 are conductively connected to the first electrically conductive layer 13 and form electrical connections for the current supply of the magnetic transducer.

This structure is the basic concept of the thin-film magnetic transducer. In terms of a conventional magnetic head, both parts of the first layer of magnetic inductive material 12 are the pole pieces of the transducer. The design of the V-shaped groove is such that these pole pieces are spaced apart from each other at the apex of the V-shaped groove to form a transducer gap which is filled by the first electrically conductive layer 13 and the second insulating layer 11'. The electrically conductive layer 13 is a single turn of the "wiring" of the magnetic transducer. As the second layer of magnetically inductive material 15 is connected to the first layer of magnetically inductive material 12 at respective connecting pads 112, it completes the magnetic circuit; it is the yoke of the magnetic transducer and preferably it is made of different material with different dimensions in reference to the first layer of magnetically inductive material to achieve best results.

Figure 2 illustrates a cross sectional view of the magnetic transducer structure of Fig. 1 along a line II-II. Fig. 2 shows additionally a bottom part of the silicon substrate 1 drafted in dotted lines to illustrate a part of the substrate which is removed during the manufacturing process.

The improved integrated magnetic transducer as described in reference to Fig. 1 is fabricated in a series of chemical etching and film deposition steps and makes use of a Si-processing technique, which is known as anisotropic etching in single crystal silicon of (100) orientation. This etching technique has been described, for example, by Bassous et al, in an article entitled "The Fabrication of High Precision Nozzles by the Anisotropic Etching of (100) Silicon" in "Journal of the Electrochemical Society", Vol. 125, #8, pages 1321 to 1327 in full detail; therefore, it seems not to be necessary to describe this fabrication technique furthermore.

With this fabrication technique there are two possibilities to build up a structure as described in reference to Fig. 1 and illustrated in Fig. 2 additionally. By anisotropic etching of V-shaped grooves through a silicon substrate 1 of (100) orientation bottom openings at the apex of the V-shaped groove are achieved which dimensions are dependent on the openings of an etch mask on the surface of the silicon substrate 1. By a series of known deposition steps, the mentioned insulating layers 11 and 11' of silicon dioxide, the layers of magnetic inductive material 12 and 15 and the electrically conductive layer 13 are disposed step by step on the silicon substrate 1. The fabrication technique of anisotropic etching is described in detail in the aforementioned article. Furthermore, Si-processing techniques of film deposition are very well known in the art that further detailed description does not seem to be necessary.

The cross sectional view shown in Fig. 2 illustrates a variant in use of this technique to etch into a silicon substrate of (100) orientation a V-shaped groove with a a bottom opening. The etching process, however, is stopped before the apex of the groove is extending through the silicon substrate. At this time the silicon substrate comprises the upper part drafted in full lines and a bottom part drafted by dotted lines in the cross sectional view. This grooved silicon substrate is processed further by depositing the aforementioned series of layers.

The last steps in this fabrication process are to achieve the gap of the magnetic transducer by removing the bottom part of the silicon substrate 1. This can be done chemically or mechanically, for example by etching or back grinding. A grinding process which is finished by a lapping step can be controlled by measuring the magnetic circuit of the transducer. When grinding reaches the range of the apex of the V-shaped groove at level L1, the magnetic circuit begins to open and changes its characteristic accordingly. The magnetic circuit is completely open when the grinding process reaches a second level L2 indicated by another dotted line. Back lapping to the final surface has to be processed very carefully. Since this surface in operation of the magnetic transducer is directed to the magnetic recording medium 2, it has to have a planar characteristic to avoid undue wear of the recording medium. The other feature is to achieve exactly the gap length which determines one of the main characteristics of the magnetic transducer.

A change in the order of processing steps offers the advantage to have better control of this lapping process for example by a light sensitive device. After etching of the V-shaped groove the first insulating layer 11, and the first layer of magnetically inductive material 12 and the second insulating 11' are serially deposited. However, before filling the remaining space of the V-shaped groove with the electrically conductive layer 13 the back-grinding steps are executed. The grinding process reaching the level L2 now opens a slot at the apex of the V-shaped groove. The amount of light which is let through this opening can be a measure for the length of the opening which determines the length of the transducer gap. The fabrication of the magnetic transducer is then continued in normal order of deposition steps starting with the filling of the V-shaped groove with the electrically conductive layer 13 as described above.

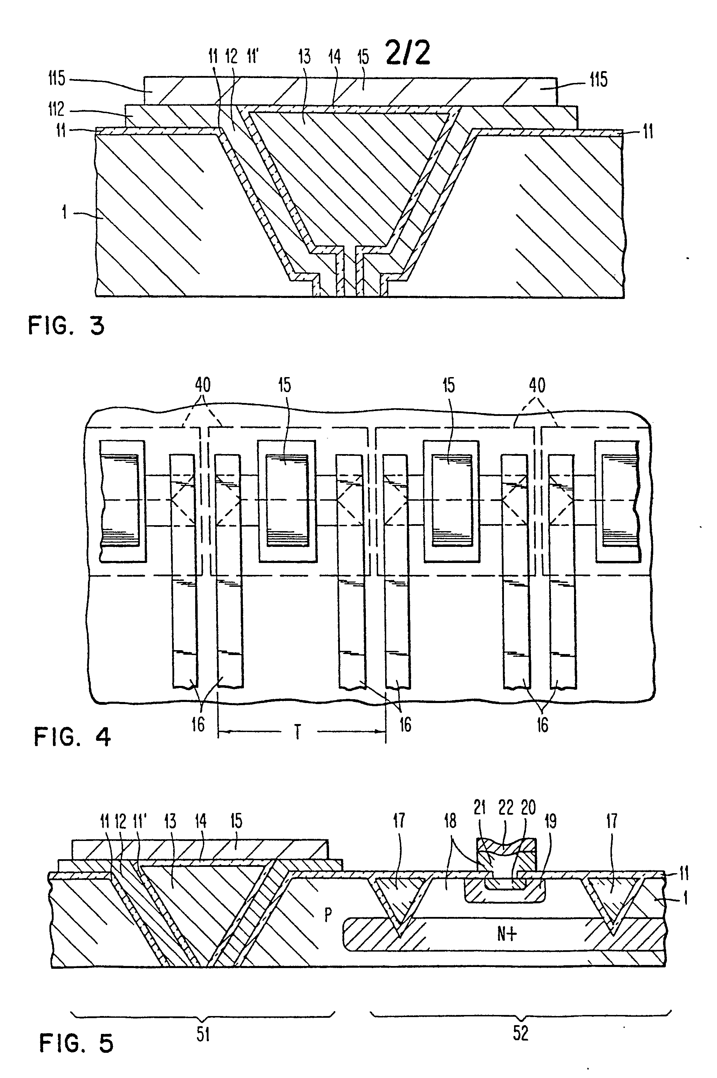

Fig. 3 illustrates another embodiment of the invention with a somewhat different structure of the magnetic transducer. The main difference of the structure to the aforementioned embodiments is that the anisotropic etching process is performed slightly differently. The groove is etched into the silicon substrate 1 just as deeply as to achieve a flat "pan" with declining sides and a flat horizontal bottom part. The so prepared silicon substrate 1 will be further processed by depositing the first insulating layer 11, the first layer of magnetically inductive material 12 and the second insulating layer 11' in series. To achieve the transducer gap a centered slotted hole has to be drilled into the bottom part of the flat groove. This can be performed by conventional machining or by a laser beam drilling, both techniques are very well known, and are not to be described in further detail.

This structure more or less has the features of a "horizontal" single turn transducer. A quasi-vertical structure, which is shown in Fig. 3 in reference to this detail of the transducer gap is manufactured in a slightly different order of manufacturing steps. Immediately following the anisotropic etching process the centered slotted hole is formed. The process is then continued in the described order of deposition steps. The result is the structure shown in Fig. 3.

This structure of a magnetic transducer, having a flat groove offers the opportunity to achieve an electrically conductive layer 13 with necessary dimensions for high current density without a very deep groove and a relatively thick substrate.

This results form the characteristic of the anisotropic etching process of an (100) oriented silicon substrate. According to this orientation of the silicon crystal the declining angle of the sides of the V-shaped groove to the horizontal direction of the plane surface of the silicon substrate is defined and fixed to an amount of $54.74°$. To achieve sufficient space for the electrically conductive layer 13, therefore, relatively deep grooves have to be etched if the pure V-shaped groove defined is chosen. On the other hand, a magnetic transducer of a flat groove structure needs additional fabrication equipment to drill the centered slotted hole for the transducer gap.

The known Si-processing technique gives a choice to adjust the magnetic transducer to different applications in reference to the characteristics of the electrically conductive layer 13. Gold is often used as conductive material. Additionally it is also possible to use aluminum to form this layer. In this case, aluminum powder is filled into the groove and the device is then heated to about 600°, to sinter the aluminum powder to a consistently electrically conductive layer 13. The so prepared device has to be cooled down carefully. This phase is critical, as well known, because of the characteristic of nickel iron compositions which may be used to form the layers of magnetically inductive material. It is known that these Ni-Fe alloys have a cool down cycle that determines its properties.

0032230

VPA 80 P 8201 EUR

From an integrated magnetic transducer with one of the aforementioned structures a multi-channel device may be built up. Such multi-channel transducers are, for example, very often used in peripherals of data processing systems. Fig. 4 illustrates a schematic diagram of top view of a silicon substrate carrying an aligned row of magnetic transducers 40 which are closely spaced apart from each other. Each of these transducers 40 has a pair of respective contact leads 16. The yoke of the magnetic transducer is formed of the second layer of magnetically inductive material 15. As indicated in Fig. 4 the distance T between respective contact leads 16 of two neighboring magnetic transducers 40 defines a pattern of tracks of the multi-channel device.

Additionally, as may be well understood by those who are skilled in the art, such a thin-film magnetic transducer may have electronic read/write circuits for operating the magnetic transducer, which circuits are integrated on the same silicon substrate. This is, by the way of an example, illustrated in Fig. 5, which shows schematically a cross sectional view of the silicon substrate 1 with a magnetic transducer structure 51 as described herein before and additionally with an integrated transistor 52.

The transistor 52 is isolated from the remaining structure on the silicon substrate by shallow V-shaped grooves 17 of POLY-Si. The transistor is built up of collector area 18 disposed on a $n^+$ doped buried region 19 of the silicon substrate. Atop of the collector area 18 another area 19 forming a base of the transistor is disposed. The base is covered by another area 20 which is an emitter of the transistor. As illustrated to build up a metal contact on the emitter there is disposed a heavy doped layer 21 and on it a contact pad 22 of aluminum.

0032230

VPA 80 P 8201 EUR

Such structures of an electronic circuit are known for a variety of possible applications as well as respective fabrication techniques. It is to be understood that within the scope of this invention any one of known Si-processing techniques for integrated electronic circuits may be utilized.

While the different structures of magnetic transducers herein described constitute preferred embodiments, it is to be understood that the scope of the invention is not limited to these precise embodiments. Besides the different embodiments a variety of changes may be made to meet the requirements of different applications and a variety of different Si-processing techniques may be used to form devices with integrated magnetic transducers as described herein before without departing from the scope of the invention.

I CLAIM:

1. An integrated magnetic transducer for recording and reproducing high frequency electrical signals on a magnetic recording medium, said transducer comprising:

    a) a silicon substrate with a groove having two sides and two ends extending into the silicon substrate;

    b) a layer of magnetically inductive material disposed over the surface of said groove;

    c) an electrically conductive layer disposed over said layer of magnetically inductive material within said groove;

    d) a second layer of magnetically inductive material disposed over said electrically conductive layer and magnetically contacted to said first magnetically inductive layer to complete the magnetic circuit; and

    e) means for contacting the electrically conductive layer at opposite ends of said groove, whereby the converging layers of said magnetically inductive material form the pole pieces of the magnetic transducer which are spaced apart at the apex of the groove to form a transducer gap.

2. An integrated magnetic transducer as defined in claim 1, wherein the groove comprises a V-shaped groove extending through the silicon substrate, such that the apex of said groove is missing.

3. An integrated magnetic transducer as defined in claim 1, wherein the groove comprises a flat bottomed groove having a bottom part which is intersected such that a centered slotted hole through the bottom part is formed.

4.        An integrated magnetic transducer as defined in any one of the claims 1-3, wherein the silicon substrate is comprising of a 100-crystal silicon.

5.        An integrated magnetic transducer as defined in any one of the claims 1-3, wherein the first layer of magnetically inductive material comprises nickel iron.

6.        An integrated magnetic transducer as defined in claim 5, wherein the second layer of magnetically inductive material is of different type and different thickness in reference to the respective first layer of magnetically inductive material, whereby the leakage of the magnetic field is reduced.

7.        An integrated magnetic transducer as defined in any one of the claims 1-3, wherein the electrically conductive layer comprises gold.

8.        An integrated magnetic transducer as defined in any one of the claims 1-3, wherein the electrically conductive layer comprises sintered aluminum powder.

9.        An integrated magnetic transducer as defined in any one of the claims 1-3, wherein the means for contacting the electrically conductive layer at opposite ends of the groove form contact leads in a plane on the surface of the silicon substrate, said contact leads extend perpendicular to the horizontal axis of the groove; and the second layer of magnetically inductive material disposed on the surface of the silicon substrate is spaced apart on both sides from the neighboring contact leads.

10.        An integrated magnetic transducer as defined in

0032230

VPA 80 P 8201 EUR

any one of the claims 1-3, comprising:

    a) a first insulating layer disposed on the surface of the groove underneath the first layer of magnetically inductive material;

    b) a second insulating layer disposed between the first layer of magnetically inductive material and the electrically conductive layer; and

    c) a third insulating layer disposed between the electrically conductive layer and the second layer of magnetically inductive material.

11. An integrated magnetic transducer as defined in claim 10, wherein the insulating layers comprise silicon dioxide.

12. An integrated magnetic transducer as defined in any one of the claims 1-3, comprising:

    a) a multiplicity of said grooves aligned in a row and spaced apart from the respective neighboring grooves to form magnetic heads of a multichannel device.

13. An integrated magnetic transducer as defined in claim 12, further comprising:

    electronic read and write circuits integrated into the silicon substrate which circuits are connected to magnetic transducers via respective contact leads.

14. A method of manufacturing an integrated magnetic transducer for recording and reproducing high frequency electrical signals on a magnetic recording medium, said method comprising the steps of:

    a) etching a V-shaped groove with declining sides into silicon substrate by an anisotropic etching process;

b) disposing a first layer of magnetically inductive material over the sides of said groove;

c) disposing an electrically conductive layer over said first layer of magnetically inductive material within said groove;

d) disposing a second layer of magnetically inductive material over said electrically conductive layer such that both layers of magnetically inductive material are magnetically contacted; and

e) disposing means for contacting said electrically conductive layer at opposite ends of said groove on the surface of said silicon substrate.

15. A method of manufacturing an integrated magnetic transducer as defined in claim 14, further comprising the following steps after processing the steps a) through c):

f) backgrinding the silicon substrate from its bottom surface until the apex of the V-shaped groove is reached; and

g) lapping said bottom surface of the silicon substrate to a level below the apex of said V-shaped groove until the spacing of free set ends of the first layer of magnetically inductive material is sufficient to form a transducer gap.

16. A method of manufacturing an integrated magnetic transducer as defined in claim 14, wherein the etching step comprises the step of:

etching into the silicon substrate a V-shaped groove until the apex of said groove extends through said silicon substrate, whereby a slotted hole is etched into the silicon substrate the dimensions of which hole are defined such that the transducer gap is to be arranged therein.

17.     A method of manufacturing an integrated magnetic transducer for recording and reproducting high frequency electrical signals on a magnetic recording medium, said method comprising the steps of:

a)  etching a flat bottomed groove having declining sides and a flat bottom part into a silicon substrate by an anisotropic  etching process;

b)  stopping said etching process when a desired depth of the groove is reached;

c)  forming a centered slotted hole through the flat bottom part of said groove to obtain a properly dimensioned notch wherein a transducer gap is to be arranged;

d)  disposing a first layer of magnetically inductive material over the sides of said flat bottomed groove;

e)  disposing an electrically conductive layer over said first layer of magnetically inductive material within said groove;

f)  disposing a second layer of magnetically inductive material over said electrically conductive layer, such that both layers of magnetically inductive material are magnetically contacted; and

g)  disposing means for contacting said electrically conductive layer at opposite ends of said groove on the surface of said silicon substrate.

18.·    A method of manufacturing an integrated magnetic transducer for recording and reproducing high frequency electrical signals on a magnetic recording medium, said method comprising the steps of:

a) etching a flat bottomed groove having declining sides and a flat bottom part into a silicon substrate by an anisotropic etching process;

b) stopping said etching process when a desired depth of the groove is reached;

c) disposing a first layer of magnetically inductive material over the sides of said flat bottomed groove;

d) forming a centered slotted hole through the flat bottom part of said groove to obtain a properly dimensioned notch wherein a transducer gap is to be arranged;

e) disposing an electrically conductive layer over said first layer of magnetically inductive material within said groove;

f) disposing a second layer of magnetically inductive material over said electrically conductive layer, such that both layers of magnetically inductive material are magnetically contacted; and

g) disposing means for contacting said electrically conductive layer at opposite ends of said groove on the surface of said silicon substrate.

19. A method of manufacturing an integrated magnetic transducer as defined in claim 18 further comprising the step of:

h) backgrinding the silicon substrate from its bottom surface, whereby a sufficient short distance between the layer of magnetically inductive material and said bottom surface is achieved to optimize the sensitivity of the transducer.

20. A method of manufacturing an integrated magnetic transducer as defined in claim 18, further comprising the step of:

i) etching the silicon substrate from its bottom surface, whereby a sufficient short distance between the layer of magnetically inductive material and said bottom surface is achieved to optimize the sensitivity of the transducer.

FIG. 1

FIG. 2

FIG. 3

FIG. 4

FIG. 5